# EUROPÄISCHE PATENTSCHRIFT

(11) **EP 3 176 398 B1**
(45) Veröffentlichungstag und Bekanntmachung des Hinweises auf die Patenterteilung: **30.01.2019**
(21) Anmeldenummer: 16201378.3
(22) Anmeldetag: 30.11.2016
(51) Int. Cl.: F01N 13/00, F01N 13/18, F01N 3/28, B21J 5/06, B01D 53/94, B23K 31/02

(54) **VERFAHREN ZUR HERSTELLUNG EINER KATALYSATORGEHÄUSEANORDNUNG MIT WENIGSTENS EINEM SENSORTRÄGER FÜR EINE ABGASANLAGE EINES FAHRZEUGS**
METHOD FOR MANUFACTURING A CATALYST HOUSING ARRANGEMENT WITH AT LEAST ONE SENSOR CARRIER FOR AN EXHAUST SYSTEM OF A VEHICLE
PROCÉDÉ DE FABRICATION D'UN BOÎTIER DE CATALYSEUR AVEC AU MOINS UN SUPPORT DE CAPTEUR POUR UN SYSTÈME DE GAZ D'ÉCHAPPEMENT D'UN VÉHICULE

(30) Priorität: 04.12.2015 DE 102015121110
(43) Veröffentlichungstag der Anmeldung: 07.06.2017
(73) Patentinhaber: Eberspächer Exhaust Technology GmbH & Co. KG, 66539 Neunkirchen (DE); Eberspächer Tecnologia de Exaustão Ltda., 18087-115 Sorocaba (BR)
(72) Erfinder: Liu, Dan, 73728 Esslingen (DE); Leandro, Kimura, 18016-321 Sorocaba - SP (BR); Thiesen, Rangel, 18046-340 Sorocaba - SP (BR)
(74) Vertreter: Ruttensperger Lachnit Trossin Gomoll

(56) Entgegenhaltungen:
- DE-A1- 19 811 569
- DE-B3-102011 018 748
- FR-A1- 2 762 045
- US-A1- 2003 010 017
- US-A1- 2007 160 510

## Beschreibung

Die vorliegende Erfindung betrifft ein Verfahren zur Herstellung einer Katalysatorgehäuseanordnung mit wenigstens einem Sensorträger für eine Abgasanlage eines Fahrzeugs.

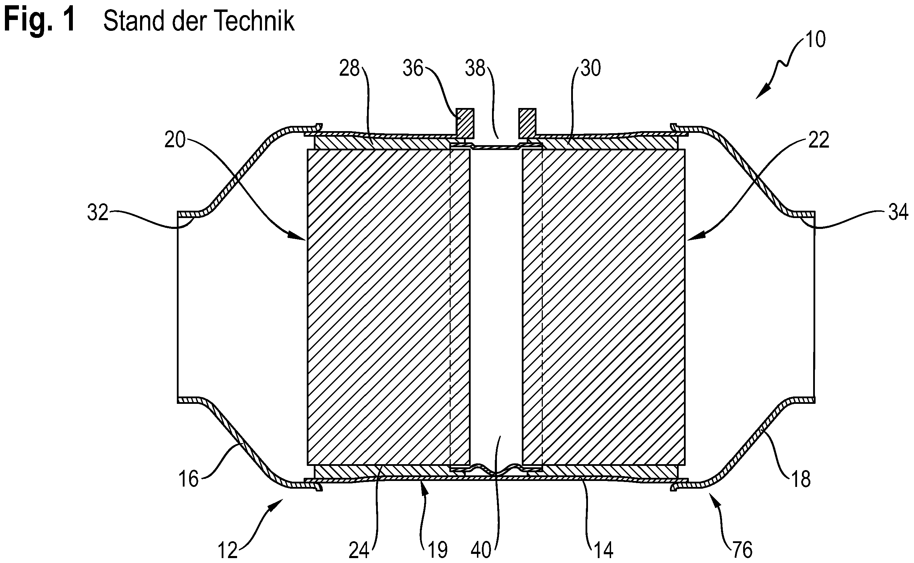

Die US 2007/00178026 A1 offenbart eine Katalysatoranordnung, an welcher ein Sensorträger für einen Sensor, beispielsweise Gassensor, vorgesehen werden kann. Diese Katalysatoranordnung ist in Fig. 1 dargestellt und allgemein mit 10 bezeichnet. Sie umfasst eine Katalysatorgehäuseanordnung 12 mit einem rohrartig, also im Wesentlichen zylindrisch, beispielsweise mit kreisrundem Querschnitt, ausgebildeten Gehäusezentralbereich 14 und an beiden Endbereichen davon jeweils einem konischen Gehäuseendbereich 16,18. Ein Katalysatorgehäuse 19 der Katalysatorgehäuseanordnung 12 ist mit dem Gehäusezentralbereich 14 und den Gehäuseendbereichen 16, 18 beispielsweise aus Blechmaterial hergestellt. Im Innenraum des Katalysatorgehäuses 19 sind zwei Katalysatoreinheiten 20,22 vorgesehen. Jede Katalysatoreinheit 20,22 umfasst einen beispielsweise monolithisch ausgebildeten Katalysatorblock 24, 26 und eine diesen umgebende und durch Presspassung im Gehäusezentralbereich 14 lagernde Lagermatte 28,30. Über eine Öffnung 32 des Gehäuseendbereichs 16 können die von einer Brennkraftmaschine ausgestoßenen Abgase in die Katalysatoranordnung 10 eintreten. Über eine Öffnung 34 des Gehäuseendbereichs 18 können die Abgase aus der Katalysatoranordnung 10 austreten.

Am Gehäusezentralbereich 14 ist ein beispielsweise ringartiger Ansatz 36 vorgesehen, an welchem ein als Innengewindeelement ausgebildeter Sensorträger durch Verschweißung festgelegt werden kann. Ein Sensor, beispielsweise Gassensor, kann in den Sensorträger eingeschraubt werden und somit durch eine am Katalysatorgehäuse 19 vorgesehene Sensoröffnung 38 hindurch in einen zwischen den beiden Katalysatoreinheiten 20,22 gebildeten Zwischenraum 40 eingreifen und dort die Gaszusammensetzung, beispielsweise den Sauerstoffanteil oder den Stickoxidanteil, erfassen.

Aus der DE 10 2011 018 748 B3 ist ein Verfahren zur Herstellung einer Anschlussbuchse am Außenumfang eines dünnwandigen Bauteils aus Metallblech für eine Abgasanlage bekannt. Bei diesem Verfahren wird an einem zur Bereitstellung eines in zylindrische Form zu bringenden Außenmantels vorgesehenen, im Wesentlichen ebenen Rohling in eine in diesem vorgesehene Öffnung ein Abschnitt mit größerer Wandungsstärke eingesetzt und durch Verschweißung festgelegt. Nachfolgend wird in diesen Abschnitt in einer kombinierten Aufreib- und Tiefziehbearbeitung eine zylindrische Öffnung eingearbeitet, in welche ein Innengewinde eingeschnitten wird. In einem folgenden Arbeitsschritt wird der Rohling zur Fertigung eines Katalysators zu einem zylindrischen Außenmantel umgeformt.

Es ist die Aufgabe der vorliegenden Erfindung, ein Verfahren bereitzustellen, mit welchem in einfacher Weise eine eine zuverlässige Halterung wenigstens eines Sensors zulassende Katalysatorgehäuseanordnung für eine Abgasanlage eines Fahrzeugs hergestellt werden kann.

Erfindungsgemäß wird diese Aufgabe gelöst durch ein Verfahren zur Herstellung einer Katalysatorgehäuseanordnung mit wenigstens einem Sensorträger für eine Abgasanlage eines Fahrzeugs gemäß Anspruch 1, umfassend die Maßnahmen:
a) Bereitstellen wenigstens eines Sensorträger-Blechrohlings dadurch, dass ein durch Heraustrennen aus einem Blechgrundmaterial bereitgestelltes im Wesentlichen ebenes Bauteil derart umgeformt wird, dass der Sensorträger-Blechrohling mit einem zur Anlage an einem Katalysatorgehäuse geformten Randbereich derart bereitgestellt wird, dass dieser Randbereich an einer Außenoberfläche des Katalysatorgehäuses in dem gesamten eine Sensoröffnung in dem Katalysatorgehäuse umgebenden Bereich der Außenoberfläche anliegen kann,
b) nach Durchführung der Maßnahme a), Bilden wenigstens einer Sensoraufnahmeöffnung in dem Sensorträger-Blechrohling durch Fließlochformen derart, dass eine Öffnungslänge größer ist als eine Materialstärke des Sensorträger-Blechrohlings vor Durchführung der Maßnahme b),
c) Erzeugen eines Innengewindes in der wenigstens einen Sensoraufnahmeöffnung zum Bereitstellen eines Sensorträgers.

Bei dem erfindungsgemäßen Verfahren wird durch das Bilden wenigstens einer Sensoraufnahmeöffnung durch Fließlochformen bei Erzeugung dieser Öffnung gleichzeitig auch eine Materialanhäufung in dem die Öffnung umgebenden Bereich erzeugt. Somit weist die Öffnung eine Öffnungslänge auf, die größer ist, als die Ausgangsdicke des Sensorträger-Blechrohlings, so dass Material zur Erzeugung eines ausreichend langen Innengewindes zur Verfügung gestellt ist.

Das erfindungsgemäße Verfahren umfasst ferner folgende Maßnahmen:
d) Bereitstellen eines Katalysatorgehäuses, vorzugsweise aus Blechmaterial, mit wenigstens einer Sensoröffnung,
e) Festlegen wenigstens eines Sensorträger-Blechrohlings an dem Katalysatorgehäuse vor der Maßnahme b) oder nach der Maßnahme b) und vor der Maßnahme c) bzw. Festlegen wenigstens eines Sensorträgers an dem Katalysatorgehäuse nach der Maßnahme c).

Bei dieser Vorgehensweise kann also der Sensorträger-Blechrohling noch vor dem Erzeugen einer Öffnung darin oder vor dem Einbringen des Innengewindes an der Katalysatorgehäuseanordnung festgelegt werden. Alternativ kann der fertiggestellte, also bereits mit Öffnung und Gewinde versehene Sensorträger an der Katalysatorgehäuseanordnung festgelegt werden. Das Katalysatorgehäuse kann dabei, je nach Art der Weiterbearbeitung, bereits als aus mehreren Teilen bzw.

Bereichen zusammengesetztes Gehäuse bereitgestellt werden, oder kann mit den noch nicht zu einem Gehäuse zusammengesetzten Einzelteilen desselben zur weiteren Bearbeitung, insbesondere auch zur an Anbringung eines oder mehrerer Sensorträger oder Sensorträger-Blechrohlinge, bereitgestellt werden.

Um eine stabile und gasdichte Anbindung eines Sensorträgers an das Katalysatorgehäuse gewährleisten zu können, wird vorgeschlagen, dass die Maßnahme e) das Festlegen durch Schweißen umfasst.

Dabei kann beispielsweise vorgesehen sein, die Maßnahme e) das Auflegen wenigstens eines Sensorträger-Blechrohlings oder Sensorträgers auf eine Außenoberfläche des Katalysatorgehäuses und das Festlegen durch Kehlnahtschweißen umfasst. Alternativ kann für einen bündigen Übergang des Sensorträgers zur Außenoberfläche des Katalysatorgehäuses vorgesehen sein, dass die Maßnahme e) das Einlegen wenigstens eines Sensorträger-Blechrohlings oder Sensorträgers in eine an dem Katalysatorgehäuse im Bereich einer Sensoröffnung gebildete Sensorträgereinsenkung und das Festlegen durch I-Nahtschweißen umfasst.

Die Maßnahme d) kann das Bereitstellen des Katalysatorgehäuses mit einem im Wesentlichen zylindrischen Gehäusezentralbereich und an wenigstens einem Ende des Gehäusezentralbereichs mit einem im Wesentlichen konischen Gehäuseendbereich umfassen, oder/und kann das Bereitstellen des Katalysatorgehäuses mit wenigstens einer Sensoröffnung in dem Gehäusezentralbereich umfassen. Insbesondere der Aufbau mit Blechmaterial ist einfach und kostengünstig durchzuführen und ermöglicht die stabile Anbindung eines oder mehrerer Sensorträger durch Verschweißung.

Die Maßnahme d) kann ferner das Bereitstellen des Katalysatorgehäuses mit wenigstens einer Sensoröffnung in wenigstens einem Gehäuseendbereich umfassen, oder/und kann das Bereitstellen des Katalysatorgehäuses mit wenigstens einer Sensoröffnung in wenigstens einem Übergangsbereich von dem Gehäusezentralbereich zu einem Gehäuseendbereich umfassen.

Die vorliegende Erfindung betrifft ferner eine Katalysatoranordnung für eine Abgasanlage eines Fahrzeugs, umfassend eine mit einem erfindungsgemäßen Verfahren hergestellte Katalysatorgehäuseanordnung.

Vorzugsweise ist dabei an wenigstens einem an der Katalysatorgehäuseanordnung festgelegten Sensorträger wenigstens ein Sensor durch Gewindeeingriff getragen. Der Gewindeeingriff ermöglicht einerseits eine stabile, andererseits eine gasdichte Anbindung eines Sensors über den Sensorträger an die Katalysatorgehäuseanordnung.

Wenigstens ein an der Katalysatorgehäuseanordnung getragener Sensor kann ein Gassensor, vorzugsweise O₂-Sensor oder NOₓ-Sensor, sein, oder/und wenigstens ein an der Katalysatorgehäuseanordnung getragener Sensor kann ein Temperatursensor sein. Grundsätzlich können also an der Katalysatorgehäuseanordnung auch mehrere, beispielsweise verschiedene Sensoren an verschiedenen Positionen getragen sein, um somit umfassende Informationen über den Zustand bzw. die Zusammensetzung der Verbrennungsabgase bereitstellen zu können.

In der Katalysatorgehäuseanordnung kann wenigstens eine Katalysatoreinheit getragen sein.

Die vorliegende Erfindung wird nachfolgend mit Bezug auf die beiliegenden Figuren detailliert beschrieben. Es zeigt:
- Fig. 1: eine Längsschnittansicht einer aus dem Stand der Technik bekannten Katalysatoranordnung;
- Fig. 2: eine Schnittdarstellung eines Sensorträger-Blechrohlings;
- Fig. 3: den Sensorträger-Blech Rohling der Fig. 2 bei Durchführung eines Fließlochformungs-Vorgangs;
- Fig. 4: den Sensorträger-Blechrohling bei einem Gewindeschneide-Vorgang;
- Fig. 5: einen Sensorträger an einem Katalysatorgehäuse mit einem daran getragenen Sensor;
- Fig. 6: einen mit einer Kehlschweißnaht an einem Katalysatorgehäuse festgelegten Sensorträger;
- Fig. 7: einen mit einer I-Schweißnaht an einem Katalysatorgehäuse festgelegten Sensorträger;
- Fig. 8: einen im Bereich eines Gehäusezentralbereichs festgelegten Sensorträger;
- Fig. 9: einen in einem Übergangsbereich von einem Gehäusezentralbereich zu einem Gehäuseendbereich festgelegten Sensorträger;
- Fig. 10: einen in einem Gehäuseendbereich festgelegten Sensorträger.

Bevor im Folgenden detailliert ein Verfahren zur Herstellung einer Katalysatorgehäuseanordnung, insbesondere eines Sensorträgers dafür, eingegangen wird, ist darauf hinzuweisen, dass grundsätzlich der Aufbau einer so herzustellenden Katalysatorgehäuseanordnung bzw. einer diese umfassenden Katalysatoranordnung so beschaffen sein kann, wie in Fig. 1 dargestellt und vorangehend mit Bezug auf Fig. 1 beschrieben. Es wird daher im Folgenden unter Verwendung der eingangs bereits verwendeten Bezugszeichen auch im Kontext der vorliegenden Erfindung auf den grundsätzlichen Aufbau einer derartigen Katalysatorgehäuseanordnung bzw. Katalysatoranordnung Bezug genommen, wie sie in Fig. 1 dargestellt ist.

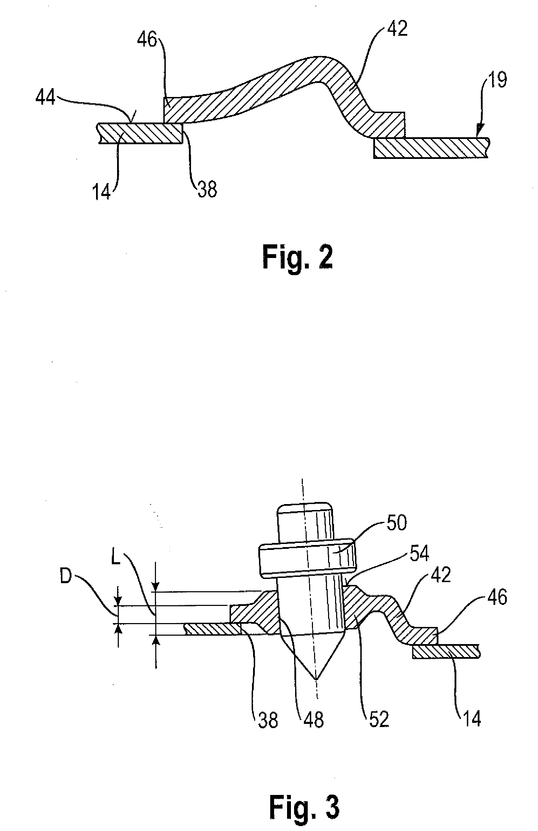

Die Fig. 2 zeigt einen allgemein mit 42 bezeichneten Sensorträger-Blechrohling 42 in Anlage an einer Außenoberfläche 44 des Katalysatorgehäuses 19, hier des Gehäusezentralbereichs 14. Der Sensorträger-Blechrohling 42 kann durch Heraustrennen, beispielsweise durch Ausstanzen oder Ausschneiden, aus einem Blechgrundmaterial, beispielsweise einer Blechtafel, als zunächst im Wesentlichen ebenes Bauteil bereitgestellt werden und dann in die für den späteren Einsatz gewünschte Form, z.B. durch Pressen, Biegen oder Tiefziehen, umgeformt werden. Dabei wird der Sensorträger-Blechrohling 42 mit einem zur Anlage am Katalysatorgehäuse 19 geformten Randbereich 46 derart bereitgestellt, dass dieser Randbereich 46 an der Außenoberfläche 44 im gesamten die Sensoröffnung 38 umgebenden Bereich anliegen kann.

In einem dann folgenden und Fig. 3 veranschaulichten Arbeitsschritt wird durch Fließlochformen eine Sensoraufnahmeöffnung 48 im Sensorträger-Blechrohling 42 erzeugt. Das Fließlochformen, allgemein auch bekannt als "Flow Drilling" oder "Thermal Friction Drilling", wird unter Einsatz eines auf eine hohe Temperatur erwärmten und um seine Längsachse rotierenden, dornartigen Werkzeugs 50 durchgeführt. Das Werkzeug 50 wird gegen den Sensorträger-Blechrohling 42 gepresst. Dabei wird in dem durch das Werkzeug 50 beaufschlagten Bereich das Metallmaterial des Sensorträger-Blechrohlings 42 lokal aufgeschmolzen und zur Seite verdrängt. Es entsteht dabei in dem die Sensoraufnahmeöffnung 48 umgebenden Bereich eine Materialaufdickung 52 an beiden Seiten des Sensorträger-Blechrohlings 42, so dass die diese Materialaufdickung 52 durchsetzende Sensoraufnahmeöffnung 48 eine Öffnungslänge L aufweist, welche größer ist, als die Ausgangsdicke D des Blechmaterials des Sensorträger-Blechrohlings 42. Durch das Werkzeug 50 kann beim Fließlochformen der Sensorträger-Blechrohling 42 im Bereich der Materialaufdickung 52 auch mit einer im Wesentlichen planen Anlagefläche 54 für einen Sensor bereitgestellt werden. Die Anlagefläche 54 liegt, wie nachfolgend noch dargestellt, in der fertiggestellten Katalysatorgehäuseanordnung 12 an der Außenseite

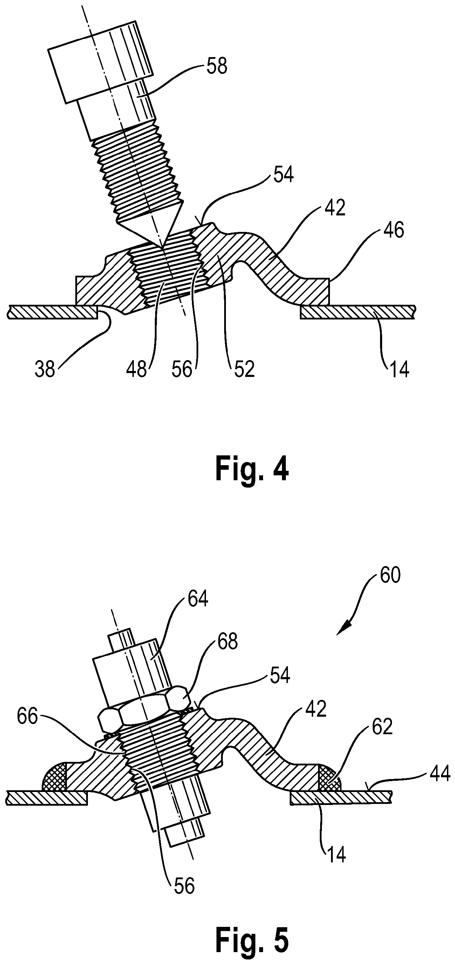

In einem in Fig. 4 veranschaulichten, dann folgenden Arbeitsschritt wird in die im Bereich der Materialaufdickung 52 gebildete Sensoraufnahmeöffnung 48 ein Innengewinde 56 geschnitten. Das Innengewinde 56 kann durch ein entsprechendes Werkzeug 58 unmittelbar nach dem Erzeugen der Sensoraufnahmeöffnung 38 im noch heißen Zustand des Sensorträger-Blechrohlings 42 erzeugt werden, oder kann dann erzeugt werden, wenn der Sensorträger-Blechrohling 42 bereits im Wesentlichen abgekühlt ist.

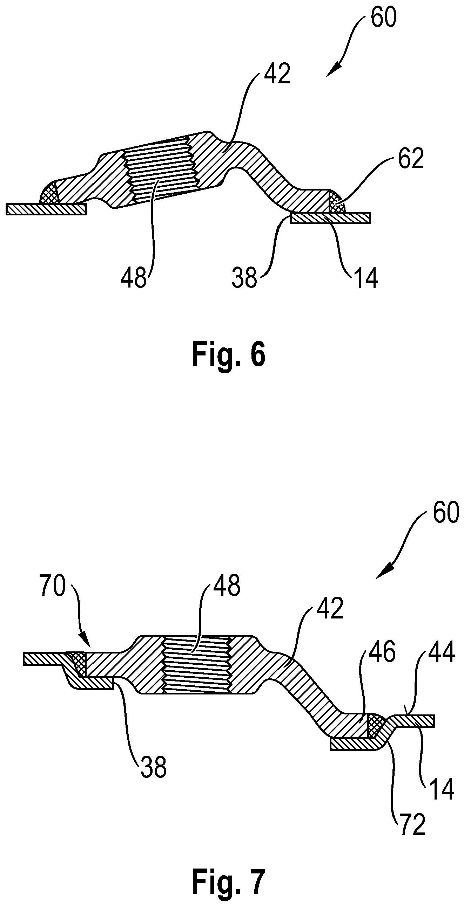

Nach dem Erzeugen des Innengewindes 56 ist der Sensorträger-Blechrohling 42 im Wesentlichen fertig bearbeitet, so dass ein allgemein mit 60 bezeichneter Sensorträger bereitgestellt ist. Dieser wird in einem in Fig. 5 veranschaulichten Arbeitsschritt mit seinem Randbereich 46 an der Außenoberfläche 44 des Katalysatorgehäuses 19, im dargestellten Beispiel des Gehäusezentralbereichs 14, durch Verschweißung festgelegt. Bei der in den Fig. 5 und 6 dargestellten Art der Festlegung durch Verschweißen wird der Randbereich 46 auf die im Wesentlichen stufenfreie, aufgrund der rohrartigen Ausgestaltung des Gehäusezentralbereich 14 jedoch gekrümmte Außenoberfläche 44 aufgelegt. In dem winkeligen Übergangsbereich zwischen dem Randbereich 46 und der Außenoberfläche 44 kann durch Kehlnahtschweißen eine den gesamten Randbereich 46 umgebende und diesen somit an das Katalysatorgehäuse 19 anbindende Schweißnaht 62 erzeugt werden. Somit wird eine stabile und insbesondere gasdichte Verbindung zwischen dem Sensorträger 60 und dem Katalysatorgehäuse 19 erzeugt.

In den Sensorträger 60 kann dann ein allgemein mit 64 bezeichneter Sensor eingeschraubt werden, so dass ein daran vorgesehenes Außengewinde 66 in Gewindeeingriff mit dem Innengewinde 56 ist. Der Sensor 64 kann so weit eingeschraubt werden, bis ein daran beispielsweise als Außensechskant ausgebildeter Anschlag 68 an der Anlagefläche 54 des Sensorträgers 60, gegebenenfalls unter Zwischenlagerung eines ringartigen Dichtungselement, gasdicht anliegt.

Bei der Herstellung bzw. Festlegung des Sensorträgers 60 können die verschiedenen vorangehend beschriebenen Arbeitsschritte auch in anderer zeitlicher Abfolge durchgeführt werden. So kann beispielsweise nach Bereitstellung des Sensorträger-Blechrohlings 42 mit der gewünschten Form dieser durch Verschweißung am Katalysatorgehäuse 19 festgelegt werden. Nachfolgend kann dann durch Fließlochformen die Sensoraufnahmeöffnung 48 bereitgestellt werden, in welcher dann das Innengewinde 56 erzeugt wird. Alternativ könnte der Sensorträger-Blechrohling 42 dann, wenn in diesem durch Fließlochformen die Sensoraufnahmeöffnung 48 erzeugt worden ist, jedoch bevor das Innengewinde 56 in die Sensoraufnahmeöffnung 38 geschnitten wird, durch Verschweißung am Katalysatorgehäuse 19 festgelegt werden.

Die Fig. 7 zeigt eine alternative Art der Anbindung des Sensorträgers 60 bzw. des Sensorträger-Blechrohlings 42, je nach Abfolge der Arbeitsschritte, an das Katalysatorgehäuse 19. Bei dieser Variante ist am Katalysatorgehäuse 19, beispielsweise am Gehäusezentralbereich 14, eine in ihrer Umfangskontur der Umfangskontur des Sensorträgers 60 bzw. des Sensorträger-Blechrohlings 42 entsprechende Sensorträgereinsenkung 70 vorgesehen. In diese Sensorträgereinsenkung 70 wird der Sensorträger 60 bzw. der Sensorträger-Blechrohling 42 eingelegt, so dass zwischen dem Randbereich 46 und einer die Sensorträgereinsenkung 70 umgebenden Wandung 72 ein Zwischenraum verbleibt. In diesen Zwischenraum wird eine den gesamten Randbereich 46 umgebende und den Zwischenraum im Wesentlichen vollständig ausfüllende I-Schweißnaht 64, auch als zweiseitige Vollnaht bezeichnet, eingebracht. Der Randbereich 46 des Sensorträgers 60 bzw. Sensorträger-Blechrohlings 42 geht somit im Wesentlichen bündig, also im Wesentlichen ohne Stufe, über die Schweißnaht 74 in die Außenoberfläche 44 des Katalysatorgehäuses 19 über.

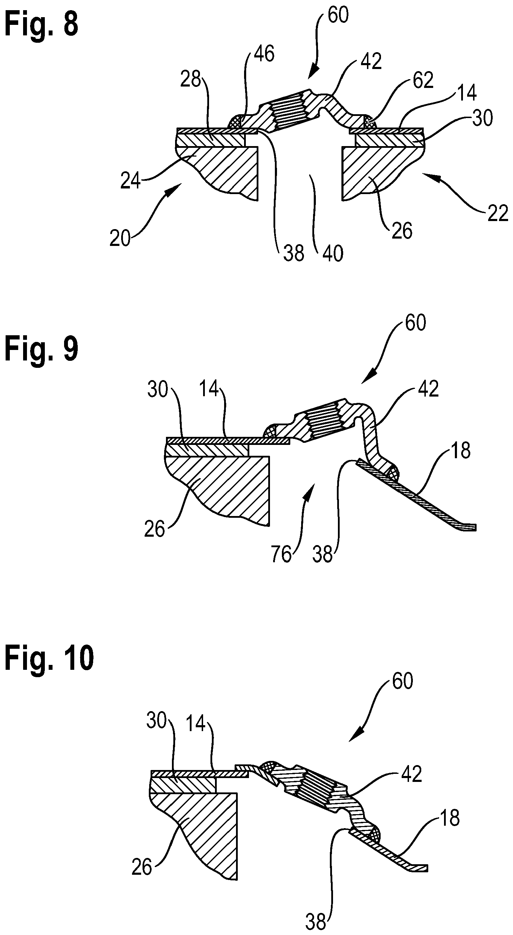

Die Fig. 8-10 zeigen verschiedene Arten der Positionierung eines Sensorträgers 60 am Katalysatorgehäuse 19. Die in Fig. 8 dargestellte Positionierung entspricht im Wesentlichen auch derjenigen Positionierung, wie sie für einen Sensorträger bei dem Aufbau der Fig. 1 vorgesehen ist. Die Sensoröffnung 38 ist im Gehäusezentralbereich 14 vorgesehen, insbesondere im Bereich des zwischen den beiden Katalysatoreinheiten 20,22 gebildeten Zwischenraums 40. Ein an dem Sensorträger 60 festzulegender Sensor kann in diesen Zwischenraum 40 eingreifen bzw. die Gaszusammensetzung oder die Temperatur des Gases in diesem Bereich erfassen.

Bei der Ausgestaltungsform gemäß Fig. 9 ist der Sensorträger 60 in einem Übergangsbereich 76 zwischen dem Gehäusezentralbereich 14 und beispielsweise dem Gehäuseendbereich 18 vorgesehen. Bei dieser Variante ist die Sensoröffnung 38 beispielsweise teilweise im Gehäusezentralbereich 14 und teilweise im Gehäuseendbereich 18 ausgebildet. Der Randbereich 46 des Sensorträgers 60 bzw. des Sensorträger-Blechrohlings 42 ist beispielsweise durch Kehlnahtschweißen an der Außenoberfläche 44 des Katalysatorgehäuses 19 festgelegt.

Bei der in Fig. 10 dargestellten Ausgestaltungsvariante ist der Sensorträger 60 bzw. der Sensorträger-Blechrohling 42 vollständig beispielsweise am Gehäuseendbereich 18 vorgesehen. Die Sensoröffnung 38 ist vollständig im konischen Bereich des Gehäuseendbereichs 18 angeordnet.

Bei der in Fig. 9 veranschaulichen Positionierung eines Sensorträgers 60 ist es vorteilhaft, die verschiedenen Bereiche bzw. Komponenten des Katalysatorgehäuses 19 also den Gehäusezentralbereich 14 und die Gehäuseendbereiche 16,18, beispielsweise durch Verschweißung oder/und Presspassung miteinander zu verbinden, bevor der Sensorträger 60 am Übergangsbereich 76 angebracht wird. Bei den in den Fig. 8 und 10 dargestellten Positionierungen kann der Sensorträger 60 an dem jeweiligen Bereich bzw. der jeweiligen Komponente des Katalysatorgehäuses 19 festgelegt werden, bevor oder nachdem diese Bereiche bzw. Komponenten des Katalysatorgehäuses 19 zusammengesetzt werden.

Es ist darauf hinzuweisen, dass an dem Katalysatorgehäuse 19 mehrere Sensorträger 60 vorgesehen sein können. So kann beispielsweise an jedem der beiden Gehäuseendbereiche 16, 18 jeweils mindestens ein Sensorträger 60 vorgesehen sein, um beispielsweise die Gaszusammensetzung oder Gastemperatur im Bereich stromaufwärts der beiden Katalysatoreinheiten 20, 22 und im Bereich stromabwärts der Katalysatoreinheiten 20, 22 erfassen zu können, oder in diesen Bereichen jeweils unterschiedliche Meßgrößen erfassen zu können. Alternativ oder zusätzlich können auch am Gehäusezentralbereich 14 mehrere Sensorträger 60, beispielsweise in Umfangsrichtung aufeinanderfolgend vorgesehen sein.

Ferner kann bei zumindest einem der Sensorträger einen Mehrzahl von Sensoraufnahmeöffnungen, beispielsweise zwei Sensoraufnahmeöffnungen nebeneinander, vorgesehen sein, so dass an einem einzigen Sensorträger mehrere Sensoren, diese beispielsweise ausgestaltet zur Erfassung verschiedener Messgrößen, getragen werden können. In diesem Falle sind der Sensorträger einerseits und die in Zuordnung dazu am Katalysatorgehäuse vorgesehene Sensoröffnung andererseits entsprechend größer zu dimensionieren. Weiter können an einem Katalysatorgehäuse Sensorträger verschiedener Formgebung vorgesehen sein, um beispielsweise abhängig vom Einbauort für die dort jeweils anzuordnenden Sensoren die geeignete Einbauposition gewährleisten zu können.

## Patentansprüche

1. Verfahren zur Herstellung einer Katalysatorgehäuseanordnung (12) mit wenigstens einem Sensorträger (60) für eine Abgasanlage eines Fahrzeugs, umfassend die Maßnahmen:
a) Bereitstellen wenigstens eines Sensorträger-Blechrohlings (42) dadurch, dass ein durch Heraustrennen aus einem Blechgrundmaterial bereitgestelltes im Wesentlichen ebenes Bauteil derart umgeformt wird, dass der Sensorträger-Blechrohling (42) mit einem zur Anlage an einem Katalysatorgehäuse (19) geformten Randbereich (46) derart bereitgestellt wird, dass dieser Randbereich (46) an einer Außenoberfläche (44) des Katalysatorgehäuses (19) in dem gesamten eine Sensoröffnung (38) in dem Katalysatorgehäuse (19) umgebenden Bereich der Außenoberfläche (44) anliegen kann,
b) nach Durchführung der Maßnahme a), Bilden wenigstens einer Sensoraufnahmeöffnung (48) in dem Sensorträger-Blechrohling (42) durch Fließlochformen derart, dass eine Öffnungslänge (L) größer ist als eine Materialstärke (D) des Sensorträger-Blechrohlings (42) vor Durchführung der Maßnahme b),
c) Erzeugen eines Innengewindes (56) in der wenigstens einen Sensoraufnahmeöffnung (48) zum Bereitstellen eines Sensorträgers (60),
d) Bereitstellen des Katalysatorgehäuses (19) aus Blechmaterial mit wenigstens einer Sensoröffnung (38),
e) Festlegen des wenigstens eines Sensorträger-Blechrohlings (42) an dem Katalysatorgehäuse (19) vor der Maßnahme b).

2. Verfahren zur Herstellung einer Katalysatorgehäuseanordnung (12) mit wenigstens einem Sensorträger (60) für eine Abgasanlage eines Fahrzeugs, umfassend die Maßnahmen:
a) Bereitstellen wenigstens eines Sensorträger-Blechrohlings (42) dadurch, dass ein durch Heraustrennen aus einem Blechgrundmaterial bereitgestelltes im Wesentlichen ebenes Bauteil derart umgeformt wird, dass der Sensorträger-Blechrohling (42) mit einem zur Anlage an einem Katalysatorgehäuse (19) geformten Randbereich (46) derart bereitgestellt wird, dass dieser Randbereich (46) an einer Außenoberfläche (44) des Katalysatorgehäuses (19) in dem gesamten eine Sensoröffnung (38) in dem Katalysatorgehäuse (19) umgebenden Bereich der Außenoberfläche (44) anliegen kann,
b) nach Durchführung der Maßnahme a), Bilden wenigstens einer Sensoraufnahmeöffnung (48) in dem Sensorträger-Blechrohling (42) durch Fließlochformen derart, dass eine Öffnungslänge (L) größer ist als eine Materialstärke (D) des Sensorträger-Blechrohlings (42) vor Durchführung der Maßnahme b),
c) Erzeugen eines Innengewindes (56) in der wenigstens einen Sensoraufnahmeöffnung (48) zum Bereitstellen eines Sensorträgers (60),
d) Bereitstellen des Katalysatorgehäuses (19) aus Blechmaterial mit wenigstens einer Sensoröffnung (38),
e) Festlegen des wenigstens eines Sensorträger-Blechrohlings (42) an dem Katalysatorgehäuse (19) nach der Maßnahme b) und vor der Maßnahme c).

3. Verfahren zur Herstellung einer Katalysatorgehäuseanordnung (12) mit wenigstens einem Sensorträger (60) für eine Abgasanlage eines Fahrzeugs, umfassend die Maßnahmen:
a) Bereitstellen wenigstens eines Sensorträger-Blechrohlings (42) dadurch, dass ein durch Heraustrennen aus einem Blechgrundmaterial bereitgestelltes im Wesentlichen ebenes Bauteil derart umgeformt wird, dass der Sensorträger-Blechrohling (42) mit einem zur Anlage an einem Katalysatorgehäuse (19) geformten Randbereich (46) derart bereitgestellt wird, dass dieser Randbereich (46) an einer Außenoberfläche (44) des Katalysatorgehäuses (19) in dem gesamten eine Sensoröffnung (38) in dem Katalysatorgehäuse (19) umgebenden Bereich der Außenoberfläche (44) anliegen kann,
b) nach Durchführung der Maßnahme a), Bilden wenigstens einer Sensoraufnahmeöffnung (48) in dem Sensorträger-Blechrohling (42) durch Fließlochformen derart, dass eine Öffnungslänge (L) größer ist als eine Materialstärke (D) des Sensorträger-Blechrohlings (42) vor Durchführung der Maßnahme b),
c) Erzeugen eines Innengewindes (56) in der wenigstens einen Sensoraufnahmeöffnung (48) zum Bereitstellen eines Sensorträgers (60),
d) Bereitstellen des Katalysatorgehäuses (19) aus Blechmaterial mit wenigstens einer Sensoröffnung (38),
e) Festlegen des wenigstens eines Sensorträgers (60) an dem Katalysatorgehäuse (19) nach der Maßnahme c).

4. Verfahren nach einem der vorangehenden Ansprüche, **dadurch gekennzeichnet, dass** die Maßnahme e) das Festlegen durch Schweißen umfasst.

5. Verfahren nach Anspruch 4 sofern auf Anspruch 1 oder 2 rückbezogen, **dadurch gekennzeichnet, dass** die Maßnahme e) das Auflegen wenigstens eines Sensorträger-Blechrohlings (42) auf die Außenoberfläche (44) des Katalysatorgehäuses (19) und das Festlegen durch Kehlnahtschweißen umfasst.

6. Verfahren Anspruch 4 oder 5 sofern auf Anspruch 1 oder 2 rückbezogen, **dadurch gekennzeichnet, dass** die Maßnahme e) das Einlegen wenigstens eines Sensorträger-Blechrohlings (42) in eine an dem Katalysatorgehäuse (19) im Bereich einer Sensoröffnung (38) gebildete Sensorträgereinsenkung (70) und das Festlegen durch I-Nahtschweißen umfasst.

7. Verfahren nach Anspruch 4 sofern auf Anspruch 3 rückbezogen, **dadurch gekennzeichnet, dass** die Maßnahme e) das Auflegen wenigstens eines Sensorträgers (60) auf die Außenoberfläche (44) des Katalysatorgehäuses (19) und das Festlegen durch Kehlnahtschweißen umfasst.

8. Verfahren Anspruch 4 sofern auf Anspruch 3 rückbezogen, **dadurch gekennzeichnet, dass** die Maßnahme e) das Einlegen wenigstens eines Sensorträgers (60) in eine an dem Katalysatorgehäuse (19) im Bereich einer Sensoröffnung (38) gebildete Sensorträgereinsenkung (70) und das Festlegen durch I-Nahtschweißen umfasst.

9. Verfahren nach einem der vorangehenden Ansprüche, **dadurch gekennzeichnet, dass** die Maßnahme d) das Bereitstellen des Katalysatorgehäuses (19) mit einem im Wesentlichen zylindrischen Gehäusezentralbereich (14) und an wenigstens einem Ende des Gehäusezentralbereichs (14) mit einem im Wesentlichen konischen Gehäuseendbereich (16, 18) umfasst.

10. Verfahren nach Anspruch 9, **dadurch gekennzeichnet, dass** die Maßnahme d) das Bereitstellen des Katalysatorgehäuses (19) mit wenigstens einer Sensoröffnung (38) in dem Gehäusezentralbereich (14) umfasst.

11. Verfahren Anspruch 9 oder 10, **dadurch gekennzeichnet, dass** die Maßnahme d) das Bereitstellen des Katalysatorgehäuses (19) mit wenigstens einer Sensoröffnung (38) in wenigstens einem Gehäuseendbereich (16, 18) umfasst.

12. Verfahren einen der Ansprüche 9-11, **dadurch gekennzeichnet, dass** die Maßnahme d) das Bereitstellen des Katalysatorgehäuses (19) mit wenigstens einer Sensoröffnung (38) in wenigstens einem Übergangsbereich (76) von dem Gehäusezentralbereich (14) zu einem Gehäuseendbereich (16, 18) umfasst.

13. Katalysatoranordnung für eine Abgasanlage eines Fahrzeugs, umfassend eine mit einem Verfahren nach einem der vorangehenden Ansprüche hergestellte Katalysatorgehäuseanordnung (12).

14. Katalysatoranordnung nach Anspruch 13, **dadurch gekennzeichnet**, an wenigstens einem an der Katalysatorgehäuseanordnung (12) vorgesehenen Sensorträger (60) wenigstens ein Sensor (64) durch Gewindeeingriff getragen ist, oder/und dass in der Katalysatorgehäuseanordnung (12) wenigstens eine Katalysatoreinheit (20, 22) getragen ist.

15. Katalysatoranordnung nach Anspruch 13 oder 14, **dadurch gekennzeichnet, dass** wenigstens ein an der Katalysatorgehäuseanordnung (12) getragener Sensor (64) ein Gassensor, vorzugsweise O₂-Sensor oder NOₓ-Sensor, ist, oder/und dass wenigstens ein an der Katalysatorgehäuseanordnung (12) getragener Sensor (64) ein Temperatursensor ist.

## Claims

1. Method for manufacturing a catalytic converter housing arrangement (12) with at least one sensor carrier (60) for an exhaust system of a vehicle, comprising the steps of
a) providing at least one sensor carrier sheet metal blank (42) so that an essentially flat component, provided by separating out of a basic sheet metal material, is transformed in such a way that the sensor carrier sheet metal blank (42) is provided with an edge area (46) in such a way that said edge area (46) can be in contact with an outer surface (44) of the catalytic converter housing (19) in the entire area surrounding a sensor opening (38) in the converter housing (19),
b) after carrying out step a), forming at least one sensor mounting opening (48) in the sensor carrier sheet metal blank (42) by flow drilling such that a length (L) of the opening is greater than the thickness (D) of the material of the sensor carrier sheet metal blank (42) before step b) is carried out, and
c) preparing an internal thread (56) in the at least one sensor mounting opening (48) for providing a sensor carrier (60),
d) providing the catalytic converter housing (19) made of a sheet metal material, with at least one sensor opening (38),
e) fixing the at least one sensor carrier sheet metal blank (42) at the catalytic converter housing (19) before step b).

2. Method for manufacturing a catalytic converter housing arrangement (12) with at least one sensor carrier (60) for an exhaust system of a vehicle, comprising the steps of
a) providing at least one sensor carrier sheet metal blank (42) so that an essentially flat component, provided by separating out of a basic sheet metal material, is transformed in such a way that the sensor carrier sheet metal blank (42) is provided with an edge area (46) in such a way that said edge area (46) can be in contact with an outer surface (44) of the catalytic converter housing (19) in the entire area surrounding a sensor opening (38) in the converter housing (19),
b) after carrying out step a), forming at least one sensor mounting opening (48) in the sensor carrier sheet metal blank (42) by flow drilling such that a length (L) of the opening is greater than the thickness (D) of the material of the sensor carrier sheet metal blank (42) before step b) is carried out, and
c) preparing an internal thread (56) in the at least one sensor mounting opening (48) for providing a sensor carrier (60),
d) providing the catalytic converter housing (19) made of a sheet metal material, with at least one sensor opening (38),
e) fixing the at least one sensor carrier (60) at the catalytic converter housing (19) after step b) and before step c).

3. Method for manufacturing a catalytic converter housing arrangement (12) with at least one sensor carrier (60) for an exhaust system of a vehicle, comprising the steps of
a) providing at least one sensor carrier sheet metal blank (42) so that an essentially flat component, provided by separating out of a basic sheet metal material, is transformed in such a way that the sensor carrier sheet metal blank (42) is provided with an edge area (46) in such a way that said edge area (46) can be in contact with an outer surface (44) of the catalytic converter housing (19) in the entire area surrounding a sensor opening (38) in the converter housing (19),
b) after carrying out step a), forming at least one sensor mounting opening (48) in the sensor carrier sheet metal blank (42) by flow drilling such that a length (L) of the opening is greater than the thickness (D) of the material of the sensor carrier sheet metal blank (42) before step b) is carried out, and
c) preparing an internal thread (56) in the at least one sensor mounting opening (48) for providing a sensor carrier (60),
d) providing the catalytic converter housing (19) made of a sheet metal material, with at least one sensor opening (38),
e) fixing the at least one sensor carrier sheet metal blank (42) at the catalytic converter housing (19) after step c).

4. Method according to one of the preceding claims, **characterized in that** step e) comprises fixing by welding.

5. Method in accordance with claim 4, if referring back to claim 1 or 2, **characterized in that** step e) comprises the placing of at least one sensor carrier sheet metal blank (42) on an outer surface (44) of the catalytic converter housing (19) and fixing by fillet welding.

6. Method in accordance with claim 4 or 5, if referring back to claim 1 or 2, **characterized in that** step e) comprises the insertion of at least one sensor carrier sheet metal blank (42) into a sensor carrier depression (70) formed on the catalytic converter housing (19) in the area of a sensor opening (38) and fixing by I-profile seam welding.

7. Method in accordance with claim 4, if referring back to claim 3, **characterized in that** step e) comprises the placing of at least one sensor carrier (60) to the outer surface (44) of the catalytic converter housing (19) and fixing by fillet welding.

8. Method in accordance with claim 4, if referring back to claim 3, **characterized in that** step e) comprises the insertion of at least one sensor carrier (60) into a sensor carrier depression (70) formed on the catalytic converter housing (19) in the area of a sensor opening (38) and fixing by I-profile seam welding.

9. Method in accordance with one of the preceding claims, **characterized in that** step d) comprises the provision of the catalytic converter housing (19) with an essentially cylindrical housing central area (14) and, on at least one end of the housing central area (14), with an essentially conical housing end area (16, 18).

10. Method in accordance with claim 9, **characterized in that** step d) comprises the provision of the catalytic converter housing (19) with at least one sensor opening (38) in the housing central area (14).

11. Method in accordance with 9 or 10, **characterized in that** step d) comprises the provision of the catalytic converter housing (19) with at least one sensor opening (38) in at least one housing end area (16, 18).

12. Method in accordance with one of the claims 9-11, **characterized in that** step d) comprises the provision of the catalytic converter housing (19) with at least one sensor opening (38) in at least one transition area (76) from the housing central area (14) to a housing end area (16, 18).

13. Catalytic converter arrangement for an exhaust system of a vehicle, comprising a catalytic converter housing arrangement (12) manufactured with a method in accordance with one of the above claims.

14. Catalytic converter arrangement in accordance with claim 13, **characterized in that** at least one sensor (64) is carried by a thread engagement on at least one sensor carrier (60) provided on the catalytic converter housing arrangement (12), or/and **in that** at least one catalytic converter unit (20, 22) is carried in the catalytic converter housing arrangement (12).

15. Catalytic converter arrangement in accordance with claim 13 or 14, **characterized in that** at least one sensor (64) being carried on the catalytic converter housing arrangement (12) is a gas sensor, preferably an O₂ sensor or NOₓ sensor, or/and that at least one sensor (64) carried on the catalytic converter housing arrangement (12) is a temperature sensor.

## Revendications

1. Procédé pour la fabrication d'un arrangement de boîtier de catalyseur (12) avec au moins un support de capteur (60) pour un système de gaz d'échappement d'un véhicule, comprenant les étapes suivantes :
a) mettre à disposition au moins une ébauche en tôle de support de capteur (42) de telle manière qu'une pièce essentiellement plane prévue par la séparation d'un matériau de base en tôle est transformée de sorte que l'ébauche en tôle de support de capteur (42) est prévue avec une région de bord (46) formée pour l'appui contre un boîtier de catalyseur (19) de sorte que cette région de bord (46) peut arriver en appui à une surface extérieure (44) du boîtier de catalyseur (19) dans l'entière région de la surface extérieure (44) entourant une ouverture de capteur (38) dans le boîtier de catalyseur (19),
b) après l'étape a), former au moins une ouverture de réception de capteur (48) dans l'ébauche en tôle de support de capteur (42) en formant un fluoperçage de sorte qu'une longueur d'ouverture (L) est plus grande qu'une épaisseur de matériau (D) de l'ébauche en tôle de support de capteur (42) avant la réalisation de l'étape b),
c) réaliser un filetage intérieur (56) dans ladite au moins une ouverture de réception de capteur (48) pour mettre à disposition un support de capteur (60),
d) mettre à disposition le boîtier de catalyseur (19) fait en tôle avec au moins une ouverture de capteur (38),
e) fixer ladite au moins une ébauche en tôle de support de capteur (42) au boîtier de catalyseur (19) avant l'étape b).

2. Procédé pour la fabrication d'un arrangement de boîtier de catalyseur (12) avec au moins un support de capteur (60) pour un système de gaz d'échappement d'un véhicule, comprenant les étapes suivantes :
a) mettre à disposition au moins une ébauche en tôle de support de capteur (42) de telle manière qu'une pièce essentiellement plane prévue par la séparation d'un matériau de base en tôle est transformée de sorte que l'ébauche en tôle de support de capteur (42) est prévue avec une région de bord (46) formée pour l'appui contre un boîtier de catalyseur (19) de sorte que cette région de bord (46) peut arriver en appui à une surface extérieure (44) du boîtier de catalyseur (19) dans l'entière région de la surface extérieure (44) entourant une ouverture de capteur (38) dans le boîtier de catalyseur (19),
b) après l'étape a), former au moins une ouverture de réception de capteur (48) dans l'ébauche en tôle de support de capteur (42) en formant un fluoperçage de sorte qu'une longueur d'ouverture (L) est plus grande qu'une épaisseur de matériau (D) de l'ébauche en tôle de support de capteur (42) avant la réalisation de l'étape b),
c) réaliser un filetage intérieur (56) dans ladite au moins une ouverture de réception de capteur (48) pour mettre à disposition un support de capteur (60),
d) mettre à disposition le boîtier de catalyseur (19) fait en tôle avec au moins une ouverture de capteur (38),
e) fixer ladite au moins une ébauche en tôle de support de capteur (42) au boîtier de catalyseur (19) après l'étape b) et avant l'étape c).

3. Procédé pour la fabrication d'un arrangement de boîtier de catalyseur (12) avec au moins un support de capteur (60) pour un système de gaz d'échappement d'un véhicule, comprenant les étapes suivantes :
a) mettre à disposition au moins une ébauche en tôle de support de capteur (42) de telle manière qu'une pièce essentiellement plane prévue par la séparation d'un matériau de base en tôle est transformée de sorte que l'ébauche en tôle de support de capteur (42) est prévue avec une région de bord (46) formée pour l'appui contre un boîtier de catalyseur (19) de sorte que cette région de bord (46) peut arriver en appui à une surface extérieure (44) du boîtier de catalyseur (19) dans l'entière région de la surface extérieure (44) entourant une ouverture de capteur (38) dans le boîtier de catalyseur (19),
b) après l'étape a), former au moins une ouverture de réception de capteur (48) dans l'ébauche en tôle de support de capteur (42) en formant un fluoperçage de sorte qu'une longueur d'ouverture (L) est plus grande qu'une épaisseur de matériau (D) de l'ébauche en tôle de support de capteur (42) avant la réalisation de l'étape b),
c) réaliser un filetage intérieur (56) dans ladite au moins une ouverture de réception de capteur (48) pour mettre à disposition un support de capteur (60),
d) mettre à disposition le boîtier de catalyseur (19) fait en tôle avec au moins une ouverture de capteur (38),
e) fixer ledit au moins un support de capteur (60) au boîtier de catalyseur (19) après l'étape c).

4. Procédé selon une des revendications précédentes, **caractérisé en ce que** l'étape e) comprend une fixation par soudure.

5. Procédé selon la revendication 4, si celle-ci dépend de la revendication 1 ou 2, **caractérisé en ce que** l'étape e) comprend le positionnement d'au moins une ébauche en tôle de support de capteur (42) sur la surface extérieure (44) du boîtier et la fixation par soudure d'angle.

6. Procédé selon la revendication 4 ou 5, si celles-ci dépendent de la revendication 1 ou 2, **caractérisé en ce que** l'étape e) comprend l'insertion d'au moins une ébauche en tôle de support de capteur (42) dans une dépression de support de capteur (70) formée au boîtier de catalyseur (19) dans la région d'une ouverture de capteur (38) et la fixation par soudure en profile I.

7. Procédé selon la revendication 4, si celle-ci dépend de la revendication 3, **caractérisé en ce que** l'étape e) comprend le positionnement d'au moins un support de capteur (60) sur la surface extérieure (44) du boîtier de catalyseur (19) et la fixation par soudure d'angle.

8. Procédé selon la revendication 4, si celle-ci dépend de la revendication 3, **caractérisé en ce que** l'étape e) comprend l'insertion d'au moins un support de capteur (60) dans une dépression de support de capteur (70) formée au boîtier de catalyseur (19) dans la région d'une ouverture de capteur (38) et la fixation par soudure en profile I.

9. Procédé selon une des revendications précédentes, **caractérisé en ce que** l'étape d) comprend mettre à disposition le boîtier de catalyseur (19) avec une région centrale de boîtier de catalyseur (14) essentiellement cylindrique et à au moins une extrémité de la région centrale de boîtier de catalyseur (14) avec une région d'extrémité de boîtier (16, 18) essentiellement conique.

10. Procédé selon la revendication 9, **caractérisé en ce que** l'étape d) comprend mettre à disposition le boîtier de catalyseur (19) avec au moins une ouverture de capteur (38) dans la région centrale de boîtier de catalyseur (14).

11. Procédé selon la revendication 9 ou 10, **caractérisé en ce que** l'étape d) comprend mettre à disposition le boîtier de catalyseur (19) avec au moins une ouverture de capteur (38) dans au moins une région d'extrémité de boîtier (16, 18).

12. Procédé selon une des revendications 9-11, **caractérisé en ce que** l'étape d) comprend mettre à disposition le boîtier de catalyseur (19) avec au moins une ouverture de capteur (38) dans au moins une région de transition de la région centrale de boîtier de catalyseur (14) à une région d'extrémité de boîtier (16, 18).

13. Arrangement de catalyseur pour un système de gaz d'échappement d'un véhicule, comprenant un arrangement de boîtier de catalyseur (12) fabriqué selon une des revendications précédentes.

14. Arrangement de catalyseur selon la revendication 13, **caractérisé en ce qu'**au moins un capteur (64) est supporté à au moins un support de capteur (60) prévu à l'arrangement de boîtier de catalyseur (12) par une prise par filetage ou/et **en ce qu'**au moins une unité de catalyseur (20, 22) est supportée dans l'arrangement de boîtier de catalyseur (12).

15. Arrangement de catalyseur selon la revendication 13 ou 14, **caractérisé en ce qu'**au moins un capteur (64) supporté à l'arrangement de boîtier de catalyseur (12) est un capteur de gaz, de préférence un capteur O₂ ou NOₓ, ou/et **en ce qu'**au moins un capteur (64) supporté à l'arrangement de boîtier de catalyseur (12) est un capteur de température.
